Europäisches Patentamt

European Patent Office

Office européen des brevets

(19)

(11) Veröffentlichungsnummer: **0 210 422**
**B1**

(12) **EUROPÄISCHE PATENTSCHRIFT**

(45) Veröffentlichungstag der Patentschrift: **03.10.90**

(51) Int. Cl.⁵: **B 60 T 8/36**

(21) Anmeldenummer: **86108454.9**

(22) Anmeldetag: **20.06.86**

(54) Druckmodulator.

(30) Priorität: **23.07.85 DE 3526191**

(43) Veröffentlichungstag der Anmeldung:
**04.02.87 Patentblatt 87/06**

(45) Bekanntmachung des Hinweises auf die
Patenterteilung:
**03.10.90 Patentblatt 90/40**

(84) Benannte Vertragsstaaten:
**AT DE FR GB IT**

(56) Entgegenhaltungen:
**DE-A-3 237 106**
**FR-A-2 412 443**
**US-A-4 113 323**

(73) Patentinhaber: **ROBERT BOSCH GMBH**
**Postfach 50**
**D-7000 Stuttgart 1 (DE)**

(72) Erfinder: **Erhardt, Rainer, Dipl.-Ing.**
**Am Wallgraben 18**
**D-7000 Stuttgart 80 (DE)**
Erfinder: **Friedow, Michael, Dipl.-Ing.**
**Uracher Weg 9**
**D-7146 Tamm (DE)**
Erfinder: **Tischer, Michael, Dipl.-Ing.**
**Schillerstrasse 14**
**D-7101 Abstatt (DE)**

EP 0 210 422 B1

## Beschreibung

### Stand der Technik

Die Erfindung geht aus von einem Druckmodulator für ABS-Systeme nach der Gattung des Hauptanspruchs (z.B. FR—A—2412443). Hydraulische Bremsanlagen, beispielsweise mit Mehrkreis-Tandem-Hauptbremszylindern, sind bekannt (DE—OS 27 23 734); hierbei ist es auch bekannt, solchen Bremsanlagen ABS-Funktionen zuzuordnen, beispielsweise in die Ausgangsbremsdruckleitungen zu den Radbremszylindern elektrisch betätigbare Mehrwege-Magnetventile zu schalten, die die gewünschten und erforderlichen ABS-Steuerfunktionen realisieren, allerdings im Falle einer Druckabsenkung üblicherweise so arbeiten, daß die jeweilige Druckleitung vom Hauptbremszylinder zur den angeschlossenen Radbremszylindern mindestens unterbrochen und Druckmittel dem Rückflüß zugeführt wird. Bei einem gewünschten Druckwiederanstieg wird dann die Verbindung zum Hauptbremszylinder wieder hergestellt, jeweils mit beliebigen Druckzeitverläufen und mit der Möglichkeit, auch Druckhaltefunktionen zu realisieren. Eine solche Realisierung von ABS-Funktionen mit Hilfe von elektrisch betätigbaren Mehrwege-Magnetventilen in den Hauptbremsleitungen kann problematisch sein, da unter Druck stehendes Bremsmittel oder Bremsfluid insoweit praktisch "verloren" geht und dieses verlorene Bremsmittel im Bereich einer Druckversorgungseinrichtung mit Pumpe, Druckspeicherbehälter und entsprechenden Druckschaltern wieder auf den hohen Druck zurückgepumpt werden muß, der für den Bremsvorgang erforderlich ist. Ferner müssen solche eine Unterbrechung oder einen Abfluß in den Bremsleitungen bewirkende Systeme sehr zuverlässig und fehlersicher sein, da sonst die Gefahr bestehen könnte, daß zu viel unter hohem Druck stehendes Bremsmittel abgelassen wird.

Zur Realisierung von ABS-Funktionen ist es ferner bekannt (US—PS 3 690 736; US—PS 3 731 979), einen parallelen Abzweig in der vom Hauptbremszylinder zu den jeweiligen Radbremszylindern führenden Leitungen anzubringen und diesen Abzweig mit einem Raum zu verbinden, der durch ein elektrisch betätigbares Zylinderkolbenaggregat je nach Ansteuerung einer Betätigungsspule gegen den Druck einer Feder veränderlich ist, so daß aus der Bremsleitung Druckvolumen entnommen und wieder zugeführt werden kann — sogenanntes Plunger-Grundprinzip. In diesem Fall bleibt der Bremskreis zwar ebenfalls geschlossen; es sind aber Mittel erforderlich, um die weitere Zufuhr von unter hohem Druck stehendem Druckmittel vom Hauptbremszylinder aus bei ABS-Funktionen zu unterbrechen, damit die Druckmittelentnahme durch den veränderlichen Raum überhaupt wirksam werden kann. Diese Unterbrechung kann auch dadurch ermöglicht werden (US—PS 3 690 736), daß der zurückweichende Kolben gleichzeitig ein Kugelventil zum Verschluß der Hauptbremszylinderzuleitung freigibt. Versagt das System allerdings an dieser Stelle, dann ist es nicht mehr möglich, vom Hauptbremszylinder aus, also durch Betätigung des Bremspedals überhaupt einen Bremsdruck aufzubauen.

Prinzipiell ist auch schon die Anordnung einer Drossel in der By-passleitung eines Druckmodulators bekannt (US—A—4 113 323). Es handelt sich hier aber um eine andere Gattung.

Bekannt ist auch bei einem Antiblockiersystem üblichen Aufbaus (US—PS 4 088 375), Mittel vorzusehen, die ferner durch selbsttätige Ansteuerung von Radbremszylindern unter Ausnutzung von für die Durchführung der ABS-Funktionen vorgesehenen Komponenten fahrerunabhängig sogenannte ASR-Funktionen realisieren können. Solche ASR-Funktionen (Antriebsschlupfregelung oder Antriebsschlupfbegrenzung) benötigen Sensoren, die feststellen, ob die (jeweilige) Radgeschwindigkeit größer als die Fahrzeuggeschwindigkeit ist und können ergänzend auch als Haltehilfe bei Kraftfahrzeugen mit Automatikgetrieben eingesetzt werden.

Der Erfindung liegt die Aufgabe zugrunde, einerseits auch bei Realisierung von ABS-Funktionen den Bremskreis vollkommen geschlossen zu lassen, andererseits aber sicherzustellen, daß bei Komponentenausfall, auch im elektrischen Bereich die normalen Bremsfunktionen weiter durchgeführt werden können, wobei ferner sichergestellt ist, daß zur Realisation von ABS-Funktionen der Hauptbremszylinderbereich vom jeweiligen Radbremszylinderbereich abgetrennt und dieser die erforderliche Bremsdruckmodulation zugeführt erhält, andererseits aber ein Ausgleich für langsame Volumenänderungen des Bremsfluids möglich ist.

### Vorteile der Erfindung

Diese Aufgabe löst der erfindungsgemäße Druckmodulator mit den kennzeichnenden Merkmalen des Hauptanspruchs und hat den Vorteil, daß bei Nichtbetätigen der Bremse die Bypaßleitung mit Drossel eine hydraulische Verbindung zwischen dem Bereich Hauptbremszylinder und dem jeweiligen Radbremszylinder herstellt, andererseits aber bei Bremsbetätigung und/oder Realisierung von ABS-Funktionen diese Leitung von dem sich bewegenden Schwimmkolben geschlossen wird.

Die Erfindung gewährleistet daher die bei Anordnung eines Kolben/Zylinderaggregats unmittelbar in die jeweiligen Hauptbremsleitungen zu den Radbremszylindern erzielten Vorteile wie Aufrechterhaltung des geschlossenen Systems, Vermeidung einer direkten mechanischen Kopplung (Fehlersicherheit) sowie die Möglichkeit der Anordnung des Schwimmkolbens so nahe wie realisierbar am jeweiligen Radbremszylinder und hat die weiteren Vorteile, daß bei einem Leck im Bereich des jeweiligen Radbremszylinders ein Auslaufen des zugeordneten Bremskreises ausgeschlossen ist.

Vorteilhaft ist ferner, daß der Schwimmkolben in seiner zylindrischen Gleitführung mit engem Luftspalt arbeitet, so daß große Kräfte erzeugt werden können; in einer Variante der Erfindung ist die Spule vom Schwimmkolben getragen, so daß auch eine besonders gute Kühlung der Spule durch das diese umspülende Druckfluidum erzielt werden kann.

Durch die in den Unteransprüchen aufgeführten Maßnahmen sind vorteilhafte Weiterbildungen und Verbesserungen des im Hauptanspruch angegebenen Druckmodulators für die Realisierung von ABS-Funktionen bei Kraftfahrzeugbremsanlagen möglich. Besonders vorteilhaft ist hierbei die symmetrische Bewicklung der Spule auf dem Schwimmkolben, so daß bei einem die Spule umgebenden, in Längsrichtung magnetisierten Ring-Permanentmagnet beide Luftspalte genutzt werden können.

In einer weiteren vorteilhaften Ausgestaltung vorliegender Erfindung kann der elektrodynamische ABS-Modulator mit äußerst geringem Mehraufwand zur Realisierung sogenannter ASR-Funktionen eingesetzt werden, und zwar dadurch, daß beim Wechsel von ABS-Funktionen auf ASR-Funktionen lediglich die Stromlaufrichtung in den Spulenwindungen umgekehrt wird und sich daher anstelle einer Bremsdruckreduzierung ein Bremsdruckaufbau erzielen läßt, so daß unabhängig vom Willen des Fahrers ein gegebenenfalls beim Anfahren durchdrehendes Rad eine gewollte Abbremsung erfährt. Hierzu kann ein entsprechendes ASR-Steuergerät entweder zur Stromrichtungsumkehr die jeweilige Erregeroder Aktuatorspule des Modulators über Schalttransistoren des jeweils entgegengesetzten Typs ansteuern (PNP — NPN) oder es sind am Modulator zwei gegensinnig gewickelte und abwechselnd einschaltbare Spulen vorgesehen.

Zeichnung

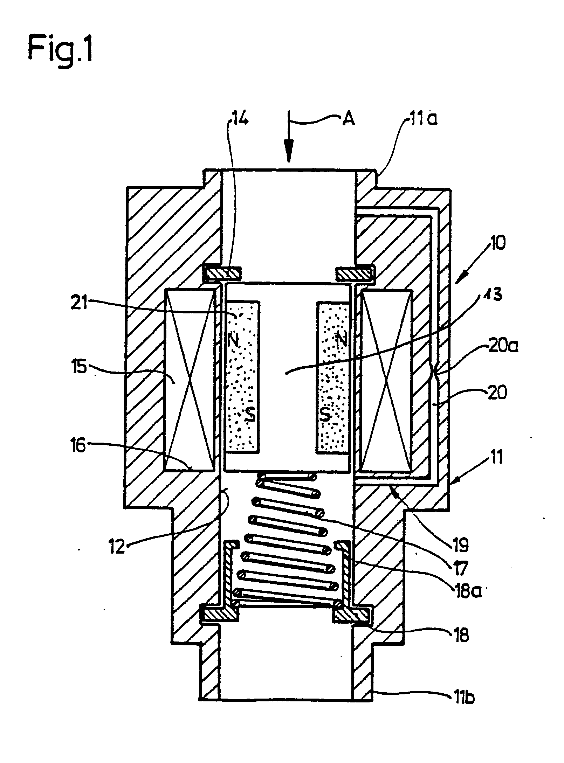

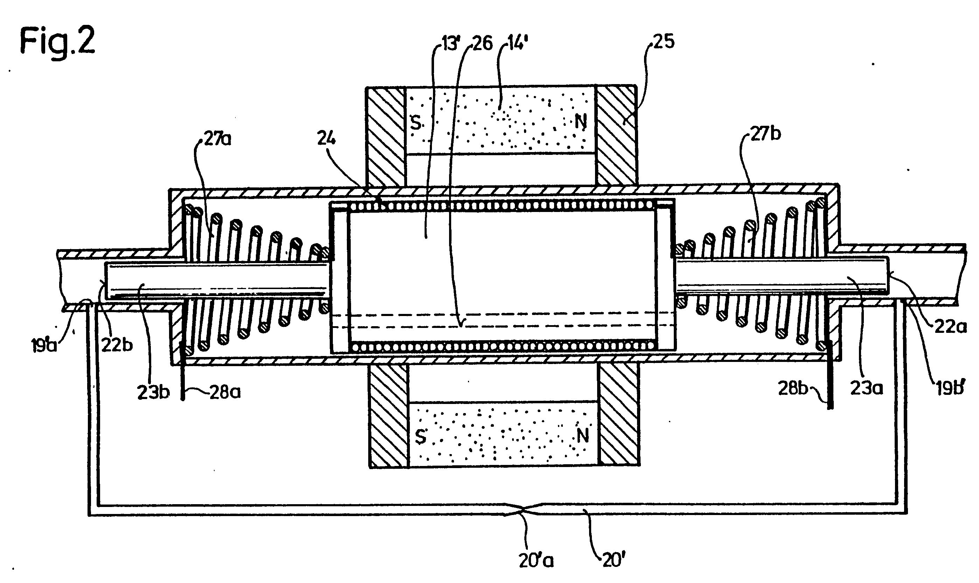

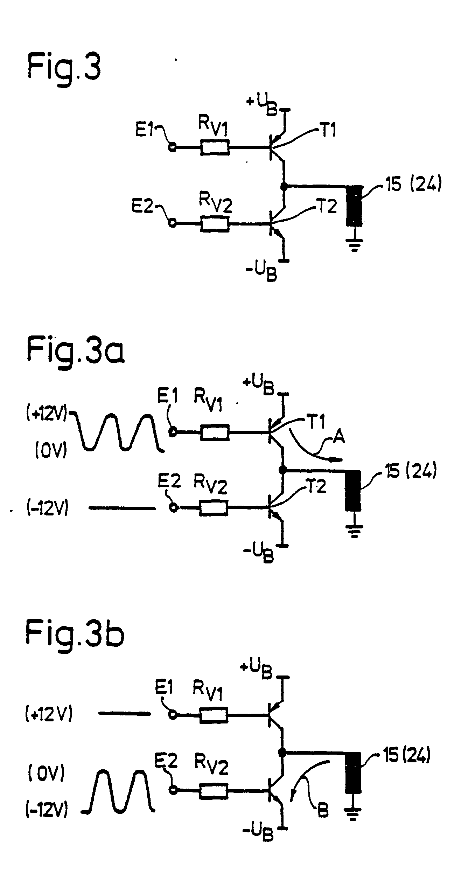

Zwei Ausführungsbeispiele der Erfindung sind in der Zeichnung dargestellt und werden in der nachfolgenden Beschreibung näher erläutert. Es zeigen Fig. 1 ein erstes Ausführungsbeispiel in vereinfachter, eine Grundkonzeption angebender Form, Fig. 2 verschiedene Einzelheiten der Schwimmkolbenlagerung in zum Teil zu Fig. 1 unterschiedlicher Ausgestaltung detaillierter dargestellt, während Fig. 3 mit den Fig. 3a und 3b ein mögliches Ausführungsbeispiel für eine Stromrichtungsumkehr in der Aktuatorspule angeben, wodurch der Einsatz für die Realisierung von ASR-Funktionen möglich wird.

Beschreibung der Ausführungsbeispiele

Bei dem Druckmodulator 10 der Fig. 1 ist ein äußeres Gehäuse 11 vorgesehen, welches beidseitig bei 11a und 11b Anschlußstutzen bildet, mit denen der Druckmodulator direkt in die jeweilige Bremsleitung vom Fahrzeug-Hauptbremszylinder zu den einzelnen Radbremszylindern geschaltet ist; hierzu kann auch ein in die Bremsleitung eingesetztes Adapterstück verwendet werden. Das Gehäuse 11 bildet eine mittige zylindrische Gleitführung 12 zur gleitverschieblichen Lagerung eines Schwimmkolbens 13, der bei Normalbremsungen den entsprechend dem Pfeil A vom Hauptbremszylinder herrührenden Druck unübersetzt — also gleiche Stirnflächen des Schwimmkolbens auf beiden Seiten — in den jeweiligen angeschlossenen Radbremszylinder weiterleitet.

Eine den Schwimmkolben 13 ohne direkte mechanische Kopplung in seiner Position vorzugsweise kontinuierlich verändernde oder verschiebende Spule 15 ist in einem entsprechenden Ausschnitt 16 des Druckmodulatorgehäuses 11 bei diesem Ausführungsbeispiel ortsfest gelagert — daher ist zur örtlichen Fixierung des Kolbens ein oberer Anschlag 14 vorgesehen, an welchen der Schwimmkolben 13 durch eine vergleichsweise nur schwache Vorspannung erzeugende Feder 17 gedrückt wird.

In vorteilhafter Ausgestaltung ist der in der Zeichenebene untere Anschlag 18 für die Feder gleichzeitig, und zwar durch einen hochgezogenen Kragen 18a als unterer Anschlag für den Schwimmkolben 13 ausgebildet, wodurch der Kolben bei einem gegebenenfalls im Bereich des Radbremszylinders auftretenden Leitungsleck nicht überdrückt werden kann und der Druck im Bremskreis nicht vollständig verlorengeht; außerdem ist der Bremsfluidverlust durch diesen Anschlag begrenzt, denn der Kolben ist in seiner Gleitführung 12 abgedichtet geführt und verschließt im übrigen, wie bei 19 erkennbar, sofort nach anfänglicher, nach unten gerichteter Bewegung, also bei Beginn eines Bremsvorgangs eine parallele Bypassleitung 20, die unter Umgehung der Dichtung des Kolbens diesen umströmen kann, wobei sich in dieser Bypassleitung jedoch eine Drossel 20a mit ausgeprägter Drosselwirkung befindet. Auf diese Weise ist es möglich, langsame Volumenänderungen des Bremsfluids hinter dem Kolben (Verschleiß der Bremsbeläge, Temperaturänderungen am Radbremszylinder u. dgl.) auszugleichen und zu verhindern, daß der Schwimmkolben 13 etwa gegen seinen unteren Anschlag bei 18a läuft. Damit durch die Bypassleitung 20 die Bremswirkung nicht beeinträchtigt wird und überhaupt nur kleine Fluidströme zum Volumenausgleich fließen können, überfährt der Kolben sofort bei Bremsbetätigung das Schnüffelloch 19, mit welchem die Bypassleitung 20 in den dem Radbremszylinder zugeordneten Druckleitungsbereich einmündet.

Die Arbeitsweise des Schwimmkolbens bei Einsetzen der ABS-Funktion ist dann so, daß der mit einem oder mehreren Permanentmagneten 21, entweder in Form vorzugsweise gleichmäßig über den Umfang als Magnetsegmente verteilt oder als Ringmagnet ausgebildet, versehene Schwimmkolben 13 durch die Wirkung der erregten Spule 15 in Richtung auf seinen oberen Anschlag 14 (zurück)gezogen wird — beim anfänglichen Bremsen hat sich eine Verlagerung des Schwimmkolbens 13 nach unten ergeben —, so daß der Schwimmkolben 13 gegen den Bremsdruck vom Hauptbremszylinder arbeitet und eine Volumenvergrößerung im Bereich des Radbremszylinders erzeugt, wodurch beliebige über der Zeit verlaufende Druckfunktionen realisiert werden können. Erkennbar beeinträchtigt ein Ausfall der Ansteuerung des Druckmodulators die normale Bremsfunktion nicht.

Bei dem in Fig. 2 dargestellten Ausführungsbeispiel einer Variante des erfindungsgemäßen Druckmodulators erfolgt die Druckübertragung bzw. -beaufschlagung über Stangenstirnflächen 22a, 22b, wobei die Stangenstirnfläche 22a dem Radbremszylinderbereich zugewandt ist und die Stangenfläche 22b des Schwimmkolbens 13' Druck vom Hauptbremszylinder zugeführt erhält. Bei dieser Ausführungsform erfolgt die Abdichtung des Kolbenraums im Bereich der den Schwimmkolben 13' beidseitig in verjüngter Form fortsetzenden Stangen 23a, 23b, wobei der weichmagnetische Schwimmkolben die Spulenwicklungen 24 trägt.

Bei diesem Ausführungsbeispiel befinden sich die die Bewegung des Schwimmkolbens 13' unter dem Einfluß der erzeugten Magnetkräfte sicherstellenden Permanentmagnete außen am diamagnetischen Zylindergehäuse 11', von Halterungen 25 aus Weicheisen gelagert, die gleichzeitig als Polschuhe den Magnetischen Fluß dem jeweiligen Luftspalt zuführen, wobei der Permanentmagnet auch hier wieder als ein einziger hohlzylindrischer und vorzugsweise in axialer Richtung magnetisierter Permanentmagnet aus einem Material mit möglichst hoher Remanenz und möglichst hohem Energieinhalt pro Volumen besteht — dies gilt für alle Permanentmagnetmaterialien, beispielsweise also Neodym oder Samariumkobalt — oder mehrere Permanentmagnete in Form von Segmenten Vorzugsweise gleichmäßig über den Außenumfang des Gehäuses 11' verteilt sind.

Die Spule 24 ist vorzugsweise auf den Kolbenkörper vergossen, wobei ein geeignetes Epoxidharz oder ein ähnliches Material verwendet werden kann, und es versteht sich, daß der Kolben über eine oder mehrere Axialbohrungen 26 verfügt, um bei Bewegung vom Kammerfluid verlustfrei durchströmt zu werden bei Abdichtung im Bereich der beidseitigen verjüngten Stangenkolben.

Dabei erfolgt die Stromzufuhr zur auf dem beweglichen Kolben 13' angeordneten Spule 24 vorzugsweise über noch vorgesehene beidseitige Positionierfedern 27a, 27b, wobei die äußeren Anschlüsse bei 28a und 28b dargestellt sind. Die gedrosselte Bypaßleitung ist wiederum mit 20', also wie bei allen, sich nur geringfügig unterscheidenden Komponenten mit einem Beistrich oben bei sonstiger Beibehaltung des Bezugszeichens versehen und beidseitige Schnüffellöcher 19a', 19b' der Bypaßleitung 20' werden bei anfänglicher Kolbenbewegung durch die Stangenkolben sofort überfahren und daher geschlossen.

In einer weiteren vorteilhaften Ausgestaltung empfiehlt es sich, um beide Luftspalte nutzen zu können, die Spule zusätzlich symmetrisch zu wikkeln, d. h. nach der Mitte gegensinnig mit umgekehrter Stromrichtung, wie dies durch die in diesem Zusammenhang gebräuchliche Kennzeichnung durch Kreuzchen und Punkte an den Wicklungen angegeben ist. Diese Teilung ist deshalb sinnvoll, weil auch der erregende Permanentmanget 14' axial in Südpol und Nordpol magnetisiert ist. Bei diesem zweiten Ausführungsbeispiel wird durch die im Luftspalt bewegte Spule eine besonders größe, auf den Schwimmkolben 13' wirkende Stellkraft erzielt, bei gleichzeitig guter Spulenkühlung.

Die Fig. 3 zeigt ein mögliches Ausführungsbeispiel eines Steuergeräts zur Ansteuerung der Erreger- oder Aktuatorspule 15 oder 24, wie sie bei den Druckmodulator-Ausführungsbeispielen der Fig. 1 und 2 eingesetzt ist. Das Ansteuergerät verfügt über zwei Eingänge E1 und E2, wobei dem Eingang E1 im ABS-Fall das betreffende ABS-Modulationssignal zugeführt wird; dem Eingang E2 wird das betreffende ASR-Modulationssignal zugeführt, wenn dieser Regelfall auftreten sollte. Die beiden Eingänge arbeiten über jeweilige Vorwiderstände Rv1 und Rv2 auf die Steuereingänge von zwei in Reihe geschalteten Schalttransistoren T1 und T2, wobei hier natürlich auch andere geeignete Halbleiterschalter, gegebenenfalls auch Relais eingesetzt werden können. Bei dem dargestellten Ausführungsbeispiel ist der Transistor T1 ein sogenannten PNP-Transistor, der die Aktuatorspule 15 mit positiver Versorgungsspannung $+U_B$ verbindet, wobei deren anderer Anschlußpunkt an Masse oder Null-Leitung liegt, während über den Transistor T2 als NPN-Transistor die gleiche Aktuatorspule 15 oder 24 mit negativer Versorgungsspannung $-U_B$ verbunden wird, je nach Ansteuerung der Transistoren T1 und T2 im ABS- oder ASR-Fall, wodurch sich eine Stromrichtungsumkehr in den Spulenwicklungen ergibt.

Betrachtet man die Ausführungsbeispiele der Fig. 1 und 2, dann erkennt man, daß im Falle der Realisierung von ABS-Funktionen der Kolben 13 bzw. 13' in Richtung auf den Hauptbremszylinderanschluß gezogen wird unter der Wirkung des elektromagnetischen Feldes mit Druckentlastung am Radbremszylinderanschluß — diese Funktion entspricht dem in Fig. 3a dargestellten Ansteuerungsfall, in welchem dem Anschluß E2 ein Sperrsignal, etwa — 12 V bei entsprechend negativer Versorgungsspannung $-U_B$ zugeführt wird und der Transistor T1 im zeitlichen Verlauf von einer wechselnden ABS-Signalspannung angesteuert ist, mit der durch den Pfeil A in diesem Falle sich ergebenden Stromrichtung durch die Aktuatorspule.

Für den ASR-Fall ist dann durch entsprechende Signalbeaufschlagung am Eingang E1 der Transistor T1 gesperrt und am Eingang E2 liegt ein entsprechend den Erfordernissen wechselndes ASR-Signal an, mit der nunmehr gegensätzlichen Stromrichtung durch die Aktuatorspule entsprechend dem Pfeil B der Fig. 3b. Man erkennt im übrigen, daß ein wirkungsvoller Bremsdruckaufbau auf diese Weise möglich ist, da, wie weiter vorn schon erwähnt, der Kolben sofort beim anfänglichen Bremsen die Schnüffellocheinmündung 19, 19' der Bypaßleitung 20, 20' überfährt, in der sich im übrigen ohnehin eine Drossel 20a, 20a' befindet.

Stehen je nach Bordnetzaufbau keine gegensätzlichen Versorgungsspannungen mit Bezug auf ein gemeinsames Massepotential zur Verfügung, dann lassen sich beispielsweise die gewünschten ASR-Funktionen auch dadurch unter Zugrundelegung der gleichen Modulatoreinheiten wie in der Fig. 1 und 2 gezeigt, realisieren, daß die jeweiligen Aktuatorspulen 15, 24 als Teilspulen jeweils für den ABS-Fall und den ASR-Fall gegensinnig gewickelt ausgebildet und je nach Regelfall alternativ angesteuert werden.

Eine Stromrichtungsumkehr in einer Spule kann aber auch durch die für sich gesehen bekannte Anordnung von vier Schalttransistoren in Brückenform mit der Spule in der Brückendiagonalen erzielt werden, wobei dann jeweils einander schräg gegenüberliegende Transistoren gemeinsam leitend gesteuert sind.

## Patentansprüche

1. Druckmodulator (10) für ABS-Systeme (Automatische-Blockierschutz-Systeme) bei Kraftfahrzeugen, bei denen unmittelbar in die hydraulische oder pneumatische Druckleitung zwischen dem Hauptbremszylinder und mindestens einem Radbremszylinder ein Kolben-Zylinderaggregat (11, 13; 11', 13') zur Realisierung von ABS-Funktionen eingeschaltet ist, bei dem ein Schwimm-Kolben (13, 13') unter Wirkung mindestens einer Feder (17; 27a, 27b) in seiner Ausgangsstellung gehalten und mittels einer Elektromagnetanordnung (15, 21; 14', 24) verschiebbar ist und bei dem eine Bypassleitung (20, 20') parallel zum Kolben-Zylinderaggregat angeordnet ist, die bei dem in seiner Ausgangsstellung befindlichen Kolben (13, 13') einen diesen umgehenden Strömungspfad bildet, der durch Verschiebung des Kolbens (13, 13') schließbar ist, wobei der Kolben beim Beginn von Bremsvorgängen hydraulisch oder pneumatisch aus seiner Ausgangsstellung verschiebbar ist, dadurch gekennzeichnet, daß in die Bypassleitung zur Erzeugung eines Druckgefälles eine Drossel (20a, 20a') eingebaut ist, daß die Feder (17, 27b) derart relativ zu dem Kolben (13, 13') eingebaut ist, daß bei einer Verschiebung aus seiner Ausgangsstellung beim Beginn von Bremsvorgängen diese Feder (17, 27b) spannbar ist, und daß die Elektromagnetanordnung bei Erregung den Kolben (13, 13') in Richtung zu seiner Ausgangsstellung verschiebt.

2. Druckmodulator nach Anspruch 1, dadurch gekennzeichnet, daß ein eine gleichmäßige innere zylindrische Gleitführung (12) bildendes Gehäuse (11) vorgesehen ist, mit einem beidseitigen Anschlag für den Schwimmkolben (13) und der diesen örtlich in seine vorgegebene Ausgangsstellung vorspannenden Feder (17), wobei die den Schwimmkolben (13) umgebende Spulenwicklung (15) in einer angrenzenden Ausnehmung des Gehäuses (11) stationär angeordnet ist, welches auch beidseitig Anschlußstutzen (11a, 11b) bildet (Fig. 1).

3. Druckmodulator nach Anspruch 1, dadurch gekennzeichnet, daß der Schwimmkolben (13) beidseitig in verjüngte Stangenkolben (23a, 23b) übergeht, die in abgedichteten, ebenfalls verjüngten Gehäuseführungen gleitverschieblich gelagert sind und daß der Schwimmkolben (13) die Spulenwicklung (24) trägt (Fig. 2).

4. Druckmodulator nach Anspruch 3, dadurch gekennzeichnet, daß ein oder mehrere Permanentmagnete (14') am äußeren Umfang des Gehäuses (11') in axialer Magnetisierung angeordnet sind, auf welche der Schwimmkolben (13) aus weichmagnetischem Material durch beidseitige Positionierfedern (27a, 27b) ausgerichtet gehalten ist, wobei das Gehäuse aus diamagnetischem Material besteht.

5. Druckmodulator nach Anspruch 3 oder 4, dadurch gekennzeichnet, daß die zur Stromzuführung zur auf dem Schwimmkolben (13') beweglich gelagerten Spule (24) über die beidseitigen Positionierfedern (27a, 27b) zu stationären Gehäuseanschlüssen (28a, 28b) erfolgt.

6. Druckmodulator nach einem der Ansprüche 3—5, dadurch gekennzeichnet, daß die die Drossel (20a') enthaltende Bypassleitung (20') mit beidseitigen Schnüffellöchern (19a', 19b') unmittelbar an die jeweiligen Stirnflächen (22a, 22b) der Stangenkolben angrenzt bei in Ausgangsstellung gehaltenem Schwimmkolben (13').

7. Druckmodulator nach einem der Ansprüche 3—6, dadurch gekennzeichnet, daß zur verlustfreien Bewegung des Kolbens im Kammerfluid des Zylindergehäuses (11') mindestens eine Axialbohrung (26) im Kolben angeordnet ist.

8. Druckmodulator nach einem der Ansprüche 3—7, dadurch gekennzeichnet, daß die vom Schwimmkolben (13') gelagerte Spule (24) zweiteilig von der Mitte aus gegensinnig gewickelt ist, zur Ausnutzung beider Luftspalte.

9. Druckmodulator nach einem der Ansprüche 1—8, dadurch gekennzeichnet, daß durch Strombeaufschlagung der Aktuatorspule (15, 24) in zum Druckabbau umgekehrter Richtung ein Druckaufbau in mindestens einem angeschlossenen Radbremszylinder realisierbar ist zur fahrerunabhängigen Durchführung von ASR-Funktionen (Antriebsschlupfregelung, -begrenzung) und/oder zur Halte-Hilfe bei Kraftfahrzeugen mit Automatikgetriebe.

10. Druckmodulator nach Anspruch 9, dadurch gekennzeichnet, daß ein Steuergerät miteinander in Reihe geschaltete Halbleiterschaltelemente (T1, T2) entgegengesetzten Typs enthält, deren Verbindungspunkt mit dem einen Anschluß der Aktuatorspule (15, 24) verbunden ist, die mit ihrem anderen Anschluß an Masse oder Null-Potential liegt, wobei die freien Anschlüsse der Halbleiterschaltelemente (T1, T2) mit Versorgungsstromquellen entgegengesetzten Vorzeichens (+$U_B$; −$U_B$) verbunden sind und die Ansteuerung der Halbleiterschaltelemente so erfolgt, daß je nach Vorliegen eines ABS- oder ASR-Falls das eine Halbleiterschaltelement gesperrt und das andere leitend geschaltet ist.

11. Druckmodulator nach Anspruch 9, dadurch gekennzeichnet, daß die Aktuatorspule (15, 16) zwei gegensinnig gewickelte Teilspulen umfaßt, die alternativ über Schaltelemente (Transistoren, Relais) eines Steuergeräts mit der lediglich einen Druckversorgungsquelle (+U$_B$) verbindbar sind.

**Revendications**

1. Modulateur de pression (10) pour des systèmes ABS (systèmes de protection automatique contre le blocage) dans des véhicules automobiles, dans lesquels un groupe piston-cylindre (11, 13; 11', 13'), prévu pour assurer des fonctions ABS, est branché directement sur la canalisation, sous pression hydraulique ou pneumatique, entre le cylindre principal de freinage et au moins un cylindre de frein de roue, groupe dans lequel un piston flottant (13, 13') est maintenu dans sa position de départ sous l'action d'au moins un ressort (17, 27a, 27b) et est susceptible d'être déplacé par un dispositif d'électro-aimant (15, 21; 14', 24'), tandis qu'il est prévu en parallèle sur le groupe piston-cylindre une canalisation de dérivation (20, 20'), qui lorsque le piston (13, 13') se trouve dans sa position de départ, constitue une voie d'écoulement contournant ce piston et qui est susceptible d'être fermée par le déplacement de celui-ci, et ce piston (13, 13') étant susceptible, au début des processus de freinage, d'être déplacé hydrauliquement ou pneumatiquement à partir de sa position de départ, modulateur caractérisé en ce que pour obtenir une chute de pression, un étranglement (20a, 20'a) est inséré dans la canalisation de dérivation, que le ressort (17, 27b) est inséré relativement au piston flottant (13, 13'), que lors d'un déplacement à partir de sa position de départ au commencement des processus de freinage ce ressort (17, 27b) peut être mis en tension, et que le dispositif d'électro-aimant, lorsqu'il est excité, déplace le piston (13, 13') en direction de sa position de départ.

2. Modulateur de pression selon la revendication 1, caractérisé en ce qu'il est prévu un boîtier (11) constituant un guidage cylindrique interne (12) assurant un glissement régulier, avec de chaque côté une butée pour le piston flottant (13) et le ressort (17) précontraint maintenant ce piston dans une position de départ prédéfinie, tandis que l'enroulement de bobine (15) entourant le piston flottant (13) est disposé à poste fixe dans un évidement contigu du boîtier (11), lequel comporte, de chaque côté, une tubulure de raccordement (11a, 11b) (figure 1).

3. Modulateur de pression selon la revendication 1, caractérisé en ce que le piston flottant (13) se prolonge de chaque côté par une tige de piston (23a, 23b) de diamètre réduit, ces tiges étant montées de façon à pouvoir glisser dans des guidages étanches, également de diamètre réduit, du boîtier, tandis que le piston flottant (13) porte l'enroulement de bobine (24) (figure 2).

4. Modulateur de pression selon la revendication 3, caractérisé en ce qu'un ou plusieurs aimants permanents (14') sont disposés, selon une mangétisation axiale, à la périphérie externe du boîtier (11'), le piston flottant (13'), en matériau magnétique doux, étant maintenu centré des deux côtés par des ressorts de positionnement (27a, 27b) et le boîtier (11') étant constitué par un matériau diamagnétique.

5. Modulateur de pression selon la revendication 3 ou la revendication 4, caractérisé en ce que l'amenée du courant pour la bobine (24) montée sur le piston flottant (13') se fait aux raccordements fixes (28a, 28b) du boîtier et par l'intermédiaire des ressorts de positionnement (27a, 27b) placés des deux côtés.

6. Modulateur de pression selon une des revendications 3 à 5, caractérisé en ce que les orifices de reniflage (19'a, 19'b) des deux côtés de la canlisation de dérivation (20') comprenant l'étrangement (20'a) sont directement contigus aux faces frontales respectives (22a, 22b) des tiges de piston lorsque le piston flottant (13') est maintenu dans sa position de départ.

7. Modulateur de pression selon une des revendications 1 à 5, caractérisé en ce que, pour permettre un déplacement sans déperdition du piston dans le fluide de la chambre du boîtier cylindrique (11'), il est prévu au moins un perçage axial (26) dans ce piston.

8. Modulateur de pression selon une des revendications 3 à 7, caractérisé en ce que la bobine (24) supportée par le piston flottant (13') comporte deux enroulements en sens inverse partant du milieu, pour utiliser deux entrefers.

9. Modulateur de pression selon une des revendications 1 à 8, caractérisé en ce qu'en alimentant en courant la bobine de commande (15, 24), on peut réaliser, dans le sens opposé à la réduction de la pression, une augmentation de pression dans au moins un cylindre de frein de roue raccordé au modulateur, pour mettre en oeuvre, indépendamment du conducteur, des fonctions ASR (régulation ou limitation du glissement de l'entraînement) et/ou comme auxiliaire d'arrêt pour des véhicules automobiles avec des boîtes de vitesses automatiques.

10. Modulateur de pression selon la revendication 9, caractérisé en ce qu'un appareil de commande comprend des éléments de commutation à semiconducteurs (T1, T2) de type opposés, branchés en série l'un avec l'autre, dont le point de jonction est relié à l'un des raccordements de la bobine de commande (15, 24), dont l'autre raccordement est à la masse ou à un potentiel nul, les raccordements libres de ces éléments de commutation à semi-conducteurs (T1, T2) étant reliés à des sources d'alimentation en courant de signes opposés (+U$_B$; −U$_B$), et la commande de ces éléments de commutation à semi-conducteurs s'effectuant de façon telle que selon qu'il se présente un cas ABS ou bien un cas ASR, l'un des éléments de commutation à semi-conducteurs est bloqué, tandis que l'autre est conducteur.

11. Modulateur de pression selon la revendication 9, caractérisé en ce que la bobine de commande (15, 16) comprend deux bobines partielles dont les enroulements sont en sens contraires et qui sont susceptibles d'être alternativement reliées, par l'intermédiaire d'éléments de commutation (transistors, relais) d'un appareil de commande, avec seulement une source d'alimentation en courant (+U$_B$).

## Claims

1. Pressure modulator (10) for antilocking systems (automatic lock protection systems) in motor vehicles, in which a piston/cylinder unit (11, 13; 11', 13') is connected directly into the hydraulic or pneumatic pressure line between the main brake cylinder and at least one wheel brake cylinder in order to achieve antilocking functions, in which unit a floating piston (13, 13') is held in its initial position under the action of at least one spring (17; 27a, 27b) and can be displaced by means of an electromagnetic arrangement (15, 21; 14', 24') and in which a by-pass line (20, 20') is arranged parallel to the piston/cylinder unit, the by-pass line forming a flow path bypassing the piston (13, 13') when it is in its initial position and being closable by displacement of the piston (13, 13'), the piston being displaceable hydraulically or pneumatically at the beginning of the braking processes from its initial position, characterized in that a throttle (20a, 20'a) is included in the by-pass line in order to generate a pressure drop, in that the spring (17, 27b) is included relatively to the floating piston (13, 13') in such a way that, during a displacement at the beginning of the bracing processes from its initial position, this spring (17, 27b) can be tensioned, and in that, when excited, the electromagnetic arrangement displaces the piston (13, 13') in the direction of its initial position.

2. Pressure modulator according to Claim 1, characterized in that a housing (11) forming a uniform internal cylindrical sliding guide (12) is provided, having a stop at both ends for the floating piston (13) and the spring (17) preloading the floating piston locally in its specified initial position, the coil winding (15) surrounding the floating piston (13) having a stationary location in an adjacent recess of the housing (11) which also forms connecting pieces (11a, 11b) at both ends (Fig. 1).

3. Pressure modulator according to Claim 1, characterized in that the floating piston (13) is continued at both ends as narrowed rod pistons (23a, 23b) which are supported so that they can slide in sealed, similarly narrowed housing guides and that the floating piston (13) carries the coil winding (24) (Fig. 2).

4. Pressure modulator according to Claim 3, characterized in that one or more permanent magnets (14') are located at the outer periphery of the housing (11') with axial magnetization on which the floating piston (13) made of low-retentivity magnetic material is held in alignment by position springs (27a, 27b) at both ends, the housing consisting of diamagnetic material.

5. Pressure modulator according to Claim 3 or 4, characterized in that the [sic] for the electricity supply to the coil (24) moveably supported on the floating piston (13') via the position springs (27a, 27b) at both ends takes place to stationary housing connections (28a, 28b).

6. Pressure modulator according to one of Claims 3—5, characterized in that the by-pass line (20') containing the throttle (20a') and having snifter holes (19a', 19b') at both ends is directly adjacent to the particular end surfaces (22a, 22b) of the rod pistons when the floating piston (13') is held in its initial position.

7. Pressure modulator according to one of Claims 3—6, characterized in that at least one axial bore (26) is located in the piston to ensure loss-free motion of the piston in the chamber fluid of the cylinder housing (11').

8. Pressure modulator according to one of claims 3—7, characterized in that the coil (24) supported by the floating piston (13') is wound in two parts in opposite directions from the centre in order to utilize both air gaps.

9. Pressure modulator according to one of Claims 1—8, characterized in that a pressure build-up in at least one connected wheel brake cylinder can be achieved by subjecting the actuator coil (15, 24) to current in the reverse direction to pressure reduction in order to carry out traction control functions (drive slip regulation or limitation) independent of the driver and/or to help stop motor vehicles with automatic gearbox.

10. Pressure modulator according to Claim 9, characterized in that a control unit contains semiconductor elements (T1, T2) of opposite type connected in series, the connecting point of these elements being connected to the one connection of the actuator coil (15, 24) whose other connection is at earth or neutral potential, the free connections of the semi-conductor switching elements (T1, T2) being connected to electricity supply sources of opposite sign (+U$_B$; −U$_B$) and the triggering of the semi-conductor switching elements taking place in such a way that depending on whether an antilocking or traction control case is present, one semi-conductor switching element is shut off and the other is made conducting.

11. Pressure modulator according to Claim 9, characterized in that the actuator coil (15, 16) includes two oppositely wound partial coils which can be connected alternatively to the single pressure [sic] supply source (+U$_B$) via switching elements (transistors, relays) of a control unit.

## Fig.1

Fig.2

# Fig.3

# Fig.3a

# Fig.3b